# EUROPEAN PATENT APPLICATION

(11) **EP 3 392 956 A1**
(43) Date of publication of application: **24.10.2018**
(21) Application number: 18167741.0
(22) Date of filing: 17.04.2018
(51) Int. Cl.: H01M 10/613

(54) **COOLING SYSTEM COMPRISING TWO HEATPIPES CONNECTED CONNECTED IN SERIES**

(30) Priority: 20.04.2017 JP 2017083722
(71) Applicant: Fujikura Ltd., Tokyo 135-8512 (JP)
(72) Inventor: RANDEEP, Singh, TOKYO, 135-8512 (JP); SAITO, Yuji, TOKYO, 135-8512 (JP); TAKAHASHI, Makoto, TOKYO, 135-8512 (JP); HORIUCHI, Yasuhiro, TOKYO, 135-8512 (JP)
(74) Representative: Cabinet Plasseraud

(57) **Abstract**

An in-vehicle battery cooling structure which cools an in-vehicle battery for supplying electric energy to a vehicle is provided. The in-vehicle battery cooling structure includes a first heat transfer unit which includes a heat absorption plate which is in contact with the in-vehicle battery and at least one first heat pipe which is in contact with the heat absorption plate on a first end portion and; a first interface plate which is in contact with a second end portion of the first heat pipe; a second heat transfer unit which includes at least one second heat pipe which is in contact with the first interface plate on a first end portion and a second interface plate which is in contact with a second end portion of the second heat pipe; and a cold plate which is in contact with the second interface plate, the cold plate including an inlet and an outlet for a coolant.

## Description

### BACKGROUND OF THE INVENTION

### Field of the Invention

The present invention relates to an in-vehicle battery cooling structure.

### Description of Related Art

For example, as a cooling structure for cooling a heat source, Japanese Unexamined Patent Application, First Publication No. 2017-33267 discloses a server board cooling structure which transfers heat of a CPU to a cold plate using a heat pipe and dissipates the heat in a cold plate.

### SUMMARY OF THE INVENTION

In recent years, vehicles (hereinafter, simply referred to as a "vehicle") that are powered by electric energy such as electric vehicles and hybrid cars are becoming widespread. An in-vehicle battery used in this type of vehicle includes a chargeable/dischargeable battery cell. However, when the battery cell is charged and discharged, heat is generated in the battery cell, and thus a cooling structure for cooling the battery cell is required.

However, for convenience of space inside the vehicle, the cooling structure for the in-vehicle battery used in this type of vehicle is required to efficiently and safely transfer heat to a position away from the in-vehicle battery and to dissipate the heat.

The present invention is made in consideration of the above-described circumstances, and an objective thereof is to provide an in-vehicle battery cooling structure capable of efficiently and safely transferring heat of the in-vehicle battery to a position away from the in-vehicle battery and dissipating the heat. There are twofold advantages for proposed heat pipe based cooling system design; firstly heat pipe provides safer system by transferring heat to remote location where it could be dissipated safely using liquid cooling, away from high voltage area, and secondly, passively transferred heat could be utilized remotely for cabin space heating or converted to electric energy.

In order to achieve the above-described object, according to a first aspect of the present invention, there is provided an in-vehicle battery cooling structure which cools an in-vehicle battery for supplying electric energy to a vehicle, including: a first heat transfer unit which includes a heat absorption plate which is in contact with the in-vehicle battery and at least one first heat pipe which is in contact with the heat absorption plate on a first end portion and; a first interface plate which is in contact with a second end portion of the first heat pipe; a second heat transfer unit which includes at least one second heat pipe which is in contact with the first interface plate on a first end portion and a second interface plate which is in contact with a second end portion of the second heat pipe; and a cold plate which is in contact with the second interface plate, the cold plate including an inlet and an outlet for a coolant.

According to the in-vehicle battery cooling structure of the above-described aspect, the first heat transfer unit transfers heat of the battery cell from the heat absorption plate to the first interface plate via the first heat pipe. In addition, the second heat transfer unit transfers the heat of the battery cell from the first interface plate to the cold plate via the second heat pipe and the second interface plate. According to the configuration, the heat is efficiently transferred to the cold plate away from the battery cell, and thus, this heat can be dissipated.

In addition, the heat absorption plate may be positioned between a plurality of battery cells included in the in-vehicle battery.

In this case, a contact area between the heat absorption plate and the battery cell is optimized, and thus, it is possible to efficiently transmit heat from the battery cell to the heat absorption plate. Accordingly, transfer efficiency of heat performed by the first heat transfer unit is optimized, and it is possible to remove heat efficiently from battery cells with passive means.

According to the above-described aspect of the present invention, it is possible to provide the in-vehicle battery cooling structure capable of efficiently transferring heat of the in-vehicle battery to a position away from the in-vehicle battery and dissipating the heat.

### BRIEF DESCRIPTION OF THE DRAWINGS

FIG. 1 is a perspective view of an in-vehicle battery cooling structure.
FIG. 2 is a plan view of the in-vehicle battery cooling structure.
FIG. 3 is a front view of the in-vehicle battery cooling structure.
FIG. 4 is a perspective view of a first heat transfer element.
FIG. 5A is an explanatory view of a first interface plate according to a modification example.
FIG. 5B is a sectional view taken along line B-B of FIG. 5A.

### DETAILED DESCRIPTION OF THE INVENTION

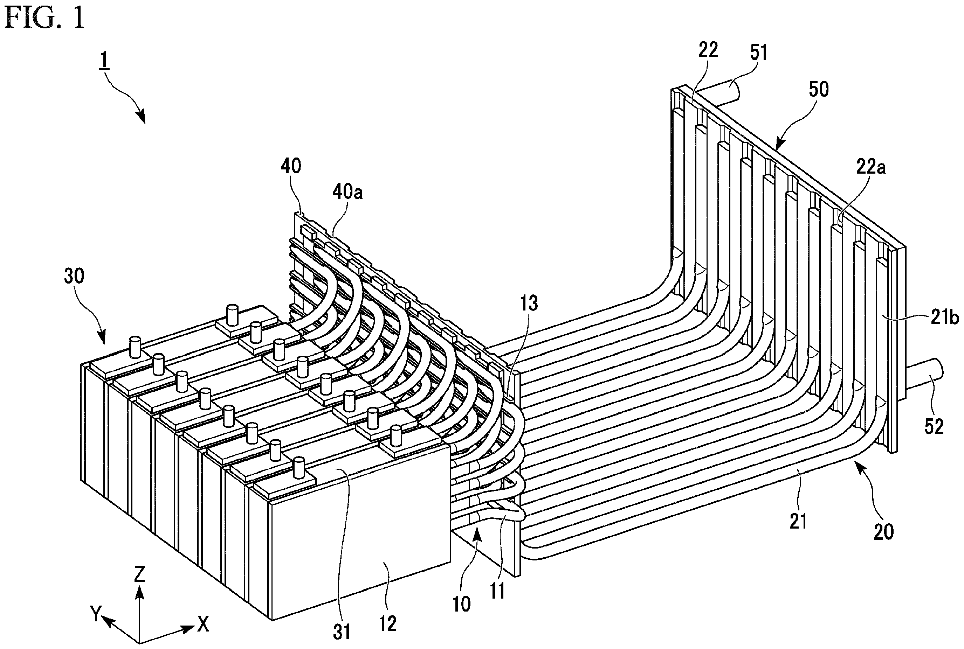

Hereinafter, a configuration of an in-vehicle battery cooling structure according to the present embodiment will be described with reference to FIGS. 1 to 5B.

### (In-vehicle Battery Cooling Structure)

As shown in FIG. 1, an in-vehicle battery cooling structure 1 includes a first heat transfer unit 10, a second heat transfer unit 20, a first interface plate 40, and a cold plate 50.

The in-vehicle battery cooling structure 1 cools an in-vehicle battery 30 which includes a plurality of battery cells 31. The battery cells 31 are electrically connected to each other in series by connectors (not shown).

Here, in the present embodiment, positional relationships of respective configurations will be described by setting an XYZ orthogonal coordinate system. Hereinafter, an X direction is referred to as a left-right direction, a Y direction is referred to as a front-back direction, and a Z direction is referred to an down-up direction.

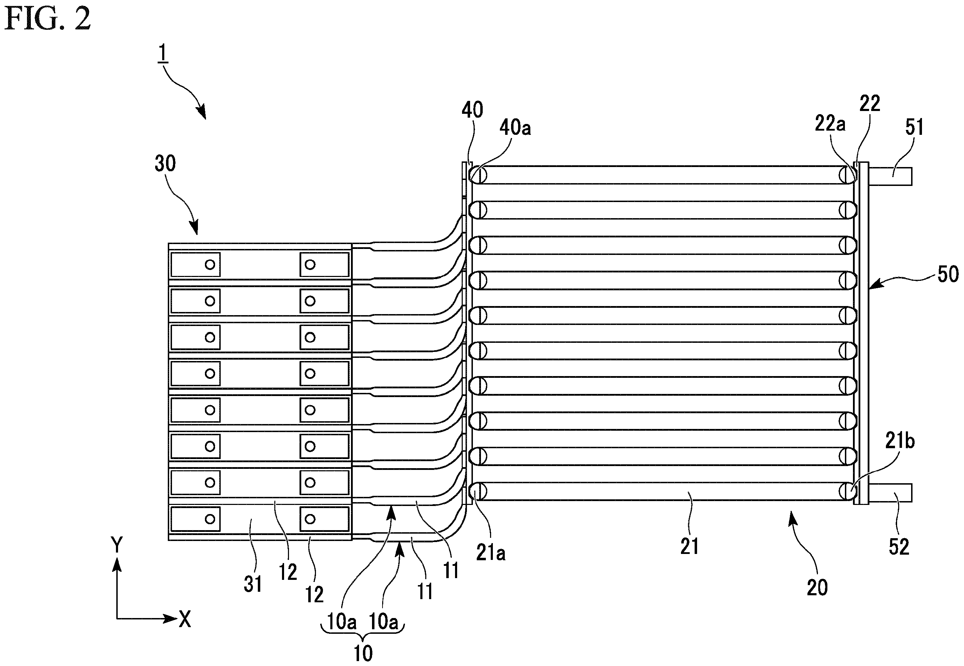

As shown in FIG. 2, the in-vehicle battery 30, the first heat transfer unit 10, the first interface plate 40, the second heat transfer unit 20, and the cold plate 50 are arranged in this order in the left-right direction.

Each of the battery cells 31 can supply electric energy to a motor of a vehicle and can be charged by regenerative energy or charged externally using electricity from grid. For battery cells 31, lithium ion based cells can be used. Each battery cell 31 has a plate shape extending in the left-right direction and the down-up direction and the battery cells 31 are arranged in the front-back direction. Each battery cell 31 generates heat during charging and discharging.

### (First Heat Transfer Unit)

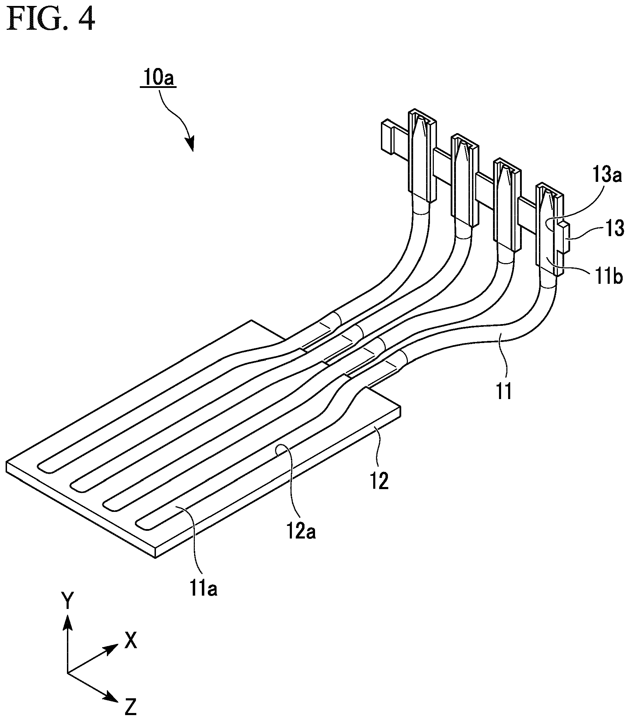

As shown in FIG. 2, the first heat transfer unit 10 includes a plurality of first heat transfer elements 10a. The plurality of first heat transfer elements 10a are arranged in the front-back direction. In FIG. 4, one of the first heat transfer elements 10a is shown. As shown in FIG. 4, the first heat transfer element 10a includes at least one first heat pipe 11, a heat absorption plate 12, and an attachment plate 13. In this embodiment, each of the first heat transfer elements 10a includes the plurality of the first heat pipes 11 arranged in down-up direction.

The heat absorption plates 12 and the attachment plates 13 are formed of a metal such as aluminum. The heat absorption plates 12 are formed in a plate shape extending in the left-right direction and the down-up direction. The attachment plates 13 are formed in a plate shape extending in the front-back direction and the down-up direction. In each first heat transfer element 10a, a plurality of grooves 12a are formed on the heat absorption plate 12, and a plurality of grooves 13a are formed on the attachment plate 13.

As the first heat pipe 11, for example, a heat pipe in which a wick and a working fluid are contained in a copper pipe can be used. Working fluid could be water or nonconductive liquid. As the nonconductive liquid, hydrofluoroether (for example, NOVEC (registered trademark) 7100 made by 3M Company) or the like can be used.

In each first heat pipe 11, a first end portion on the in-vehicle battery 30 side functions as an evaporating portion 11a of the working fluid, and a second end portion on the second heat transfer unit 20 side functions as a condensing portion 11b.

The evaporating portion 11a of each first heat pipe 11 is fixed into the groove 12a of the heat absorption plate 12 in a flattened state. The condensing portion 11b of each first heat pipe 11 is fixed into the groove 13a of the attachment plate 13 in a flattened state. As the fixing method, press-fitting, brazing, soldering, or the like can be used.

The heat absorption plates 12 are in contact with the evaporating portions 11a of the first heat pipes 11. The heat absorption plates 12 and the evaporating portions 11a of the first heat pipes 11 are positioned between the adjacent battery cells 31 in the front-back direction and are in contact with the battery cells 31 (refer to FIG. 2). Accordingly, if the battery cells 31 generate heat, the heat absorption plates 12 and the evaporating portions 11a are heated.

The condensing portions 11b of the first heat pipes 11 are attached to the first interface plate 40 via the attachment plates 13.

As shown in FIG. 2, in a plan view, each first heat pipe 11 is formed in an approximately L shape in which the evaporating portion 11a extends in the left-right direction and the condensing portion 11b extends in the front-back direction. A middle portion of the first heat pipe 11 is curved so that the first heat pipe 11 extends in the left-right direction and the front-back direction.

In addition, the in-vehicle battery cooling structure 1 of the present embodiment includes a plurality of first heat transfer elements 10a. The heat absorption plate 12 and the evaporating portions 11a of each first heat transfer element 10a are disposed between the battery cells 31 or at both end portions of the in-vehicle battery 30 in the front-back direction.

Moreover, the first heat pipes 11 of the one first heat transfer element 10a are disposed at positions different from the other first heat pipes 11 of the adjacent heat transfer element 10a in the down-up direction such that the condensing portions 11b of the first heat pipes 11 do not interfere with each other.

### (Second Heat Transfer Unit)

As shown in FIG. 2, the second heat transfer unit 20 includes a plurality of second heat pipes 21 and a second interface plate 22.

Similarly to the first heat pipes 11, each second heat pipe 21 includes a copper pipe in which the wick and the working fluid are contained. In each second heat pipe 21, a first end portion on the first interface plate 40 side functions as an evaporating portion 21a, and a second end portion on the second interface plate 22 via cold plate 50 side functions as a condensing portion 21b.

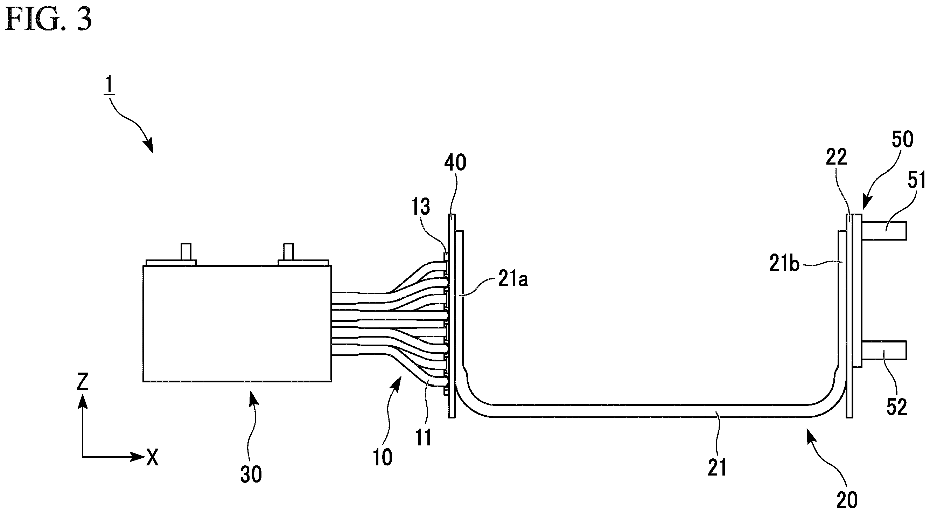

In a front view as shown in FIG. 3, in each second heat pipe 21, the evaporating portion 21a and the condensing portion 21b extend in the down-up direction and a portion therebetween extends in the left-right direction. Accordingly, each second heat pipe 21 is formed in an approximately U shape in a front view.

As shown in FIGS. 2 and 3, each of the first interface plate 40 and the second interface plate 22 is formed in a plate shape extending in the front-back direction and the down-up direction. The first interface plate 40 and the second interface plate 22 are formed of a metal such as aluminum.

A plurality of grooves 40a extending in the down-up direction are formed on a surface of the first interface plate 40 on the evaporating portion 21a side. The evaporating portion 21a of each second heat pipe 21 is fixed inside the groove 40a of the first interface plate 40.

A plurality of grooves 22a extending in the down-up direction are formed on a surface of the second interface plate 22 on the second heat pipe 21 side. The condensing portion 21b of each second heat pipe 21 is fixed inside the groove 22a of the second interface plate 22.

As the fixing method, press-fitting, brazing, soldering, or the like can be used.

### (Cold Plate)

The cold plate 50 is in contact with the second interface plate 22 of the second heat transfer unit 20. The cold plate 50 is formed in a plate shape extending in a front-back direction and the down-up direction.

The cold plate 50 includes an inlet 51 of a coolant, an outlet 52 of the coolant, and a flow path (not shown) of the coolant. The cold plate 50 is mainly formed of a metal such as aluminum and the flow path is provided inside the cold plate 50. The inlet 51 and the outlet 52 are connected to each other by the flow path. The flow path may meander in the cold plate 50 in order to efficiently transfer heat from the cold plate 50 to the coolant. The flow path and the inlet/outlet 51, 52 for the cold plate 50 are interchangeable.

The inlet 51 and the outlet 52 are provided on a surface of the cold plate 50 opposite to the second heat transfer unit 20. The coolant flows from the inlet 51 into the cold plate 50 by a pump (not shown) or the like, passes through the flow path in the cold plate 50, and flows out from the outlet 52. While the coolant flows through the flow path in the cold plate 50, the temperature of the coolant increases by heat received from the second heat transfer unit 20.

Next, an operation of the in-vehicle battery cooling structure 1 having the above configuration will be described.

In the first heat transfer unit 10, the heat absorption plates 12 and the evaporating portions 11a of the first heat pipes 11 are in contact with the battery cells 31. Accordingly, if the battery cells 31 generate heat according to the charging and discharging process, the heat absorption plates 12 and the evaporating portions 11a are heated. In the evaporating portions 11a, the working fluid in the first heat pipes 11 are evaporated by heat received via the heat absorption plates 12 or heat received directly from the battery cells 31 by the first heat pipes 11. The evaporated working fluid passes through the first heat pipes 11, flows to the condensing portions 11b of the first heat pipes 11, and transfers the heat to the first interface plate 40. Accordingly, the working fluid in vapor phase is cooled by the condensing portions 11b resulting in phase change back from vapor to liquid. The condensed working fluid flows to the evaporating portions 11a again by a capillary force generated by pores of the wick in the first heat pipes 11.

According to the above-described operation, the first heat transfer unit 10 can continuously transfer heat from the battery cells 31 to the first interface plate 40. Accordingly, the first interface plate 40 is heated by the operation of the first heat transfer unit 10.

In the second heat transfer unit 20, the evaporating portion 21a of each second heat pipe 21 comes into close contact with the groove 40a of the first interface plate 40. Accordingly, if the first interface plate 40 is heated by the first heat transfer unit 10, the evaporating portions 21a are heated. In the evaporating portions 21a, the working fluid in the second heat pipes 21 is evaporated by the heat received from the first interface plate 40. The evaporated working fluid passes through the second heat pipes 21, flows to the condensing portions 21b of the second heat pipes 21, and transfers the heat to the second interface plate 22. The second interface plate 22 is in contact with the cold plate 50, and thus, the second interface plate 22 is cooled by the coolant flowing through the cold plate 50. Accordingly, the working fluid in vapor phase is condensed back to liquid in the condensing portions 21b of the second heat pipes 21. The condensed working fluid flows to the evaporating portions 21a again by a capillary force generated by pores of the wick in the second heat pipes 21.

According to the above-described operation, the second heat transfer unit 20 can continuously transfer heat from the first interface plate 40 to the cold plate 50 so as to dissipate the heat.

As described above, in the in-vehicle battery cooling structure 1 of the present embodiment, the first heat transfer unit 10 and the second heat transfer unit 20 can continuously transfer the heat to the cold plate 50 located remotely from the in-vehicle battery 30 so as to dissipate waste heat generated by battery cells 31. Accordingly, it is possible to efficiently cool the battery cells 31 using in-vehicle battery cooling structure 1.

In addition, the heat absorption plates 12 and the evaporating portions 11a of the first heat pipes 11 are positioned between the battery cells 31. In this manner, it is possible to channel heat in best possible way between the heat absorption plates 12 or the evaporating portions 11a and the battery cells 31. According to this configuration, heat transfer efficiency of the first heat transfer unit 10 is optimum and this configuration provides most efficient cooling structure of battery cells 31.

In addition, a technical scope of the present invention is not limited to the above-described embodiment, and various modifications can be applied to the present invention within a scope that does not depart from the gist of the present invention.

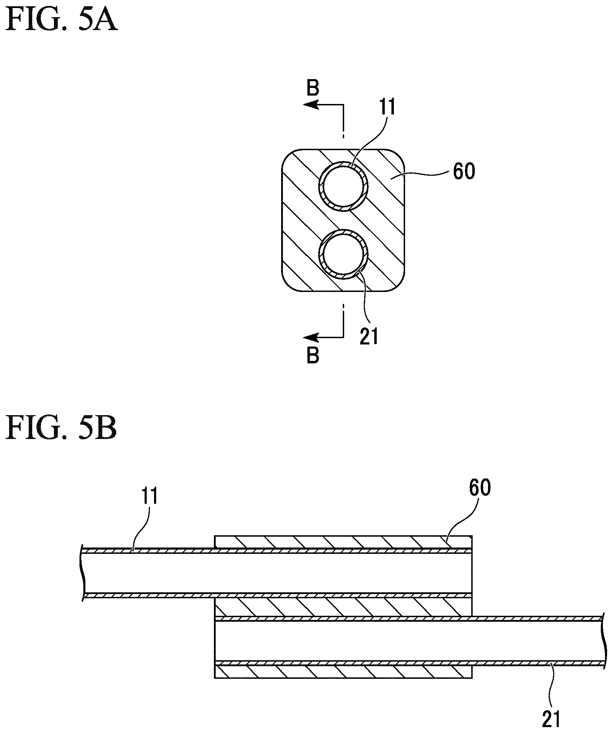

For example, in the above-described embodiment, the heat is transferred from the first heat transfer unit 10 to the second heat transfer unit 20 via a plate-shaped first interface plate 40. However, the shape of the first interface plate can be appropriately changed. For example, as shown in FIGS. 5A and 5B, the heat may be transferred from the first heat transfer unit 10 to the second heat transfer unit 20 by a block-shaped first interface plate 60. In the example of FIGS. 5A and 5B, two through-holes arranged parallel to each other are provided in the block-shaped first interface plate 60, and the first heat pipe 11 and the second heat pipe 21 are inserted into the two through-holes. The condensing portion 11b of the first heat pipe 11 and the evaporating portion 21a of the second heat pipe 21 are inserted into the two through-holes. According to this configuration, an optimum contact area between the first interface plate 60 and the heat pipes 11 and 21 is provided and the heat can be more effectively transmitted from the first heat pipe 11 to the second heat pipe 21 via the first interface plate 60. In addition, the through-holes provided in the first interface plate 60 can be arranged in different orientation with respect to each other. As a material of the first interface plate 60, aluminum or the like can be used.

Additionally, according to the in-vehicle battery cooling structure 1 of the present embodiment, it is also possible to heat the battery cells 31 instead of cooling the battery cells 31 in a cold district. In this case, a warmed liquid flows through the flow path of the cold plate 50, and the positions of the evaporating portions and the condensing portions in each heat pipe are interchanged. That is, the heat of the liquid flowing through the cold plate 50 is transferred to the battery cells 31 by the second heat transfer unit 20 and the first heat transfer unit 10 respectively, and the battery cells 31 is warmed by this heat. As charging/discharging efficiency of lithium ion battery is poor at lower temperatures. Therefore, by warming the battery cells 31 in this manner, it is possible to achieve high performance of the battery cells 31.

Whether the battery cells 31 are cooled or warmed can be easily switched depending on temperature of the liquid flowing through the cold plate 50 and the temperature of the battery cells 31.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

### DESCRIPTION OF THE REFFERENCE SYMBOLS

1...in-vehicle battery cooling structure, 10...first heat transfer unit, 11...first heat pipe, 12...heat absorption plate, 20...second heat transfer unit, 21...second heat pipe, 22...second interface plate, 30...in-vehicle battery, 31...battery cell, 40, 60...first interface plate, 50...cold plate, 51...inlet, 52...outlet

## Claims

1. An in-vehicle battery cooling structure which cools an in-vehicle battery for supplying electric energy to a vehicle, the in-vehicle battery cooling structure comprising:
a first heat transfer unit which includes a heat absorption plate which is in contact with the in-vehicle battery and at least one first heat pipe which is in contact with the heat absorption plate on a first end portion and;
a first interface plate which is in contact with a second end portion of the first heat pipe;
a second heat transfer unit which includes at least one second heat pipe which is in contact with the first interface plate on a first end portion and a second interface plate which is in contact with a second end portion of the second heat pipe; and
a cold plate which is in contact with the second interface plate, the cold plate including an inlet and an outlet for a coolant.

2. The in-vehicle battery cooling structure according to claim 1,
wherein the heat absorption plate is positioned between a plurality of battery cells included in the in-vehicle battery.
